# EUROPEAN PATENT APPLICATION

(11) **EP 4 431 485 A1**
(43) Date of publication of application: **18.09.2024**
(21) Application number: 23161552.7
(22) Date of filing: 13.03.2023
(51) Int. Cl.: C05D 9/00, C05F 11/00, C05G 3/30, C05G 3/80, C05G 5/30, C05G 3/20, A01N 25/12, A01N 25/26

(54) **A COATED PARTICLE**

(71) Applicant: Yara International ASA, 0277 Oslo (NO)
(72) Inventor: Nafisi, Vajiheh, 3926 Porsgrunn (NO); Tande, Terje, 3970 Langesund (NO)
(74) Representative: AWA Sweden AB

(57) **Abstract**

The present disclosure provides a solid particle comprising a core, a first layer comprising a first coating composition and at least partially covering the core, a second layer comprising a second coating composition and at least partially covering the first layer, and water-insoluble particles between the first and second layers. The present disclosure also provides a method for producing a solid particle according to the present disclosure and the use of the solid particle as a fertilizer.

## Description

### Field of the disclosure

The present disclosure is related to the field of coated particles, in particular coated fertilizer particles.

### Background

A variety of industrial products are manufactured as particles having a size from 0.1 to 10 mm. These particles are stored and transported in bulk or in bags of various sizes. For most applications, such as fertilizer, it is important for the particles to suffer the least amount of damage before they reach the final customer.

To improve the properties of particles, in particular their dustiness and caking behavior, it is common to apply a coating composition to particles after their manufacture and before their storage and transport.

Coating compositions are well known in the field and can comprise various chemical components. However, coating compositions are often developed to improve only one property, but there is often a need to improve several properties of a given solid particle. So, there is a need to provide new coating systems that can improve several properties of a solid particle.

### Summary of the disclosure

A new coating approach is provided in this disclosure. Particles are coated with a first coating composition, water-insoluble particles and a second coating composition. The coated particles exhibit improved properties, such as dustiness, anti-caking behavior, and water absorption, compared to non-coated solid particles or particles only coated with the first coating composition and water-insoluble particles.

In a first aspect, the present disclosure provides a solid particle comprising a core, a first layer comprising a first coating composition and at least partially covering the core, a second layer comprising a second coating composition and at least partially covering the first layer, and water-insoluble particles between the first and second layers.

In another aspect, the present disclosure provides a method for producing a solid particle according to the present disclosure, comprising the steps of:
a) providing a core particle;
b) applying a first coating composition to the core particle provided in step a), thereby obtaining a coated particle comprising a first layer of a coating composition;
c) applying water-insoluble particles to the coated particles obtained in step b); and
d) applying a second coating composition to the particle obtained in step c). In another aspect, the present disclosure provides the use of a coating system comprising a first coating composition, water-insoluble particles and a second coating composition, for coating a solid particle, in particular a solid fertilizer particle.
In another aspect, the present disclosure provides the use of solid particles coated according to the present disclosure as a fertilizer.

### Detailed description of the disclosure

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a component" refers to one or more than one component.
"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g., component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the composition.

In a first aspect, the present disclosure provides a solid particle comprising a core, a first layer comprising a first coating composition and at least partially covering the core, a second layer comprising a second coating composition and at least partially covering the first layer, and water-insoluble particles between the first and second layers.

Solid particles, such as fertilizer particles, present several challenges when handled, stored, and transported. These particles often contain inorganic salts or small organic molecules that can separate from the particles, thereby creating dust, and/or react with chemical components present in the atmosphere, such as water. Dust is highly undesirable because it creates health hazards and reduces the applicability of the product. Water absorption is also undesirable as it increases the weight of the particles and reduces their strength, which also reduces the applicability of the product. Fertilizer particles are often applied in the field with mechanical spreaders that throw the particles with great force. If the particles have not sufficient strength, the particles are damaged by the spreader and do not travel as far as planned.

Particles stored together in heaps or bags can also agglomerate with each other, a process called caking. This results in blocks of products measuring several centimeters, instead of millimeters for single particles, which is also not adapted for modern field application techniques and devices.

Remedies to some of these issues are known for some particles, in particular fertilizer particles. For example, anti-caking can be improved by coating the particles with water-insoluble particles. The presence of water-insoluble particles on the outside of the particles creates a physical barrier to the caking of the small particles.

Dustiness of particles can be improved by applying a liquid coating composition to the particles. The idea is that the small dust particles liberated by the particle are stuck to the liquid composition and cannot escape in the atmosphere.

However, trying to solve more than one problem at the same time is more difficult than simply combining different methods. For example, applying water-insoluble particles to a particle having a layer of anti-dust coating composition damages the layer of the coating composition, and creates small holes in it, allowing dust to come out of the particle and water moisture to come into the particle. To obtain a particle that has a good dustiness property, that has a low moisture absorption, and is resistant to caking, it was found that a combination of three measures was required: a first layer comprising a first coating composition and at least partially covering the core, a second layer comprising a second coating composition and at least partially covering the first layer, and water-insoluble particles between the first and second layers.

Without being bound by theory, it is hypothesized that: the first coating layer provides some dust control and some resistance to water absorption; the water-insoluble particles create a physical barrier against caking or agglomeration of the particles; and the second coating layer provides additional dust control and resistance to water absorption by closing the gaps created by the water-insoluble particles, while maintaining the physical barrier of the water-insoluble particles. In some embodiments, the solid particle is a solid fertilizer particle.

In some embodiments, the core of the solid particle comprises a component selected from the group consisting of a source of nitrogen, a source of phosphorus, and a source of potassium. The core of fertilizer particles often comprises at least a source of one of the macronutrients: nitrogen, phosphorus, and potassium. These nutrients are required in large amounts by the crops, and solid particles are an efficient way to supply these nutrients to the crop.

These nutrients sources are well known in the field, and some can contain more than one nutrient. Sources of macronutrients include urea, ammonium nitrate, calcium nitrate, mono- or di-ammonium phosphate, potassium phosphate, potassium chloride, and potassium sulfate. In some embodiments, the core of the solid particle comprises a component selected from the group consisting of urea, ammonium nitrate, calcium nitrate, mono- or di-ammonium phosphate, potassium phosphate, potassium chloride, potassium sulfate, and mixtures thereof.

In some embodiments, the core of the solid particle is an NPK particle, which means that it comprises the three macronutrients nitrogen, phosphorus, and potassium.

In some embodiments, the core of the solid particle comprises a secondary nutrient and/or a micronutrient. Secondary nutrients are calcium, sulphur, and magnesium. Micronutrients include copper, iron, manganese, molybdenum, zinc, and boron. In some embodiments, the core of the solid particle comprises a source of a secondary nutrient and/or a source of a micronutrient.

In some embodiments, the core of the solid particle is homogeneous, meaning that the components of the core are homogeneously dispersed in the core.

In some embodiments, the first coating composition comprises a component selected from the group consisting of an oil, a wax, an amine, an antioxidant, and mixtures thereof. In some embodiments, the first coating composition comprises an oil, a wax, an amine, and an antioxidant.

In some embodiments, the first coating composition comprises from 60 to 90 weight% of an oil, from 5.0 to 20 weight% of a wax, from 1.0 to 10 weight% of an amine, and an antioxidant.

In some embodiments, the first coating composition comprises from 60 to 90 weight%, from 70 to 90 weight%, from 70 to 85 weight%, or from 75 to 85 weight% of an oil.

In some embodiments, the first coating composition comprises from 5.0 to 20 weight%, from 10 to 20 weight%, or from 10 to 15 weight% of a wax.

In some embodiments, the first coating composition comprises from 1.0 to 10 weight%, from 2.0 to 10 weight%, from 4.0 to 10 weight%, or from 5.0 to 10 weight% of an amine.

In some embodiments, the first coating composition comprises from 70 to 85 weight% of an oil, from 10 to 15 weight% of a wax, from 5.0 to 10 weight% of an amine, and an antioxidant.

It was observed that a first coating composition comprising from 60 to 90 weight% of an oil, from 5.0 to 20 weight% of a wax, from 1.0 to 10 weight% of an amine, and an anti-oxidant, in particular wherein the first coating composition comprises from 70 to 85 weight% of an oil, from 10 to 15 weight% of a wax, from 5.0 to 10 weight% of an amine, and an anti-oxidant showed good results for some particles, in particular NPK particles.

In some embodiments, the oil comprised in the first coating composition is selected from the group of mineral oil, hydrotreated process oil, vegetable oil or refined mineral oil. These oils were found to be particularly suitable for a conditioning agent for fertilizer particles. In some embodiments, the oil comprised in the first coating composition comprises hydrotreated light naphthenic distillate and/or hydrotreated heavy naphthenic distillate.

In some embodiments, the wax comprised in the first coating composition is selected from the group of intermediary wax, petroleum wax, vegetable wax, animal wax, mineral wax, or mixtures thereof. There are several types of wax commercially available: petroleum wax, such as paraffin wax, intermediary wax, and microcrystalline wax; vegetable wax, such as carnauba wax, bayberry wax, candelilla wax, jojoba wax, ouricury wax, soy wax, tallow tree wax; animal wax, such as beeswax, lanolin, shellac wax, spermaceti; and mineral wax, such as ceresin wax, montan wax, ozocerite or peat wax. Paraffin waxes are defined as predominantly straight-chain saturated hydrocarbons with smaller proportions of branched-chain and cyclo-paraffinic compounds. Intermediary waxes are mixtures of straight-chain, branched-chain, and cyclo-paraffinic compounds, intermediate in character between those of paraffin and microcrystalline waxes. Microcrystalline waxes are hydrocarbons of higher average molecular weight than those of paraffin waxes with a wider range of components containing a high portion of branched-chain and cyclo-paraffinic hydrocarbons.

In some embodiments, the amine comprised in the first coating composition is a fatty amine, for example a tallow alkyl amine or a palm-based amine, which is an amine produced from palm oil.

In some embodiments, the first coating composition comprises from 50 to 250 ppm (parts per million), or from 50 to 150 ppm of an antioxidant.

In some embodiments, the first coating composition comprises from 50 to 250 ppm (parts per million), or from 50 to 150 ppm of butylated hydroxytoluene, also known as dibutylhydroxytoluene. The antioxidant protects the components, such as amines, of the first coating composition against oxidation.

In some embodiments, the solid particle comprises from 0.01 to 1.0 weight%, or from 0.05 to 0.5 weight% of the first coating composition. The amount of the first coating composition should be balanced between several factors: more coating may provide a better protection against dusting and water absorption, but it also decreases the overall nutrient content of the coated particle, and it can make the product more sticky, so more difficult to handle and more prone to caking. It was found that an amount below 1.0 weight% was a good compromise between the different properties.

In some embodiments, the water-insoluble particles are selected from the group consisting of dolomite, diatomaceous earth, kaolin, talcum, gypsum, and silicates. The role of the water-insoluble particles is to create a physical barrier such that two particles do not agglomerate together. Most of known water-insoluble materials are suitable for this disclosure. Talcum is a popular material for use as coating material in fertilizer products. It is cheap, easily available, and not toxic.

In some embodiments, the solid particle comprises from 0.01 to 1.0 weight%, from 0.05 to 1.0 weight%, from 0.01 to 0.5 weight%, from 0.05 to 0.5 weight%, from 0.1 to 0.5 weight% of water-insoluble particles. The amount of water-insoluble particles should be balanced between several factors: more particles reduce even more the caking risk of the particles, but it decreases the nutrient content of the particles, it also makes the particles less suitable to be dissolved in water, and the water-insoluble particles can create dust. An amount from 0.1 to 0.5 weight% was found to be optimal in some embodiments.

In some embodiments, the second coating composition comprises a component selected from the group consisting of an oil, a wax, an amine, an antioxidant, and mixtures thereof. In some embodiments, the second coating composition comprises an oil, a wax, and an antioxidant. It was observed that an oil-based composition for the second coating composition provided a good improvement to caking, dustiness and water absorption properties for some particles, in particular fertilizer NPK particles.

In some embodiments, the oil comprised in the second coating composition is selected from the group of mineral oil, hydrotreated process oil, vegetable oil or refined mineral oil. These oils were found to be particularly suitable for a conditioning agent for fertilizer particles. In some embodiments, the oil comprised in the second coating composition comprises hydrotreated light naphthenic distillate and/or hydrotreated heavy naphthenic distillate. In some embodiments, the first and second coating composition comprise the same oil.

In some embodiments, the wax comprised in the first coating composition is selected from the group of intermediary wax, petroleum wax, vegetable wax, animal wax, mineral wax, or mixtures thereof. In some embodiments, the first and second coating composition comprise the same wax.

In some embodiments, the second coating composition comprises from 50 to 250 ppm (parts per million), or from 50 to 150 ppm of an antioxidant.

In some embodiments, the second coating composition comprises from 50 to 250 ppm (parts per million), or from 50 to 150 ppm of butylated hydroxytoluene, also known as dibutylhydroxytoluene.

In some embodiments, the solid particle comprises from 0.01 to 1.0 weight% or from 0.05 to 0.5 weight% of the second coating composition. The amount of the second coating composition should be balanced between several factors: more coating may provide a better protection against dusting and water absorption, but it also decreases the overall nutrient content of the coated particle, and it can make the product more sticky, so more difficult to handle and more prone to caking. It was found that an amount below 1.0 weight% was a good compromise between the different properties.

In some embodiments, the first coating composition is polymer-free. In some embodiments, the first coating composition is free of non-biodegradable polymer. In some embodiments, the second coating composition is polymer-free. In some embodiments, the second coating composition is free of non-biodegradable polymer.

Some countries or regions, for example the European Union, have introduced or are planning to introduce regulations to limit or ban the use of polymers or non-biodegradable polymers in agricultural products, such as fertilizers. Polymers are often present in coating compositions because they can provide interesting properties to the coated particles. In the present disclosure, it was found that polymers were not required to obtain a satisfactory performance.

The solid particle may comprise from 0.02 to 2.0 weight% of the first coating composition and the second coating composition.

In another aspect, the present disclosure provides a method for producing a solid particle according to the present disclosure, comprising the steps of:
a) providing a core particle;
b) applying a first coating composition to the core particle provided in step a), thereby obtaining a coated particle comprising a first layer of a coating composition;
c) applying water-insoluble particles to the coated particles obtained in step b); and
d) applying a second coating composition to the particle obtained in step c). The coated solid particles as described above can be obtained by performing the following steps: first, a core particle, or a composition comprising core particles, is provided. As described above, the particle may be a fertilizer particle, in particular a fertilizer particle comprising a source of a macronutrient. The fertilizer particle may also comprise a secondary nutrient and/or a micronutrient.

A first coating composition is applied to the core particle. The application can be performed with any means known in the field. The first coating composition may be sprayed onto the particles or poured as a liquid. The particles may be kept in movement to ensure a good distribution of the coating composition over the particles. The particles are mixed for a first period of time to allow the coating composition to dry out.

Water-insoluble particles are then applied to the core particles coated with the first coating composition. The application can be made in the same device as the application of the first coating composition or in a different device. The particles may be kept in movement to ensure a good distribution of the water-insoluble particles over the coated particles.

Finally, a second coating composition is applied to the particles coated with the first coating composition and the water-insoluble particles. The second coating composition may be sprayed onto the particles or poured as a liquid. The particles may be kept in movement to ensure a good distribution of the second coating composition over the particles. The particles are mixed for a second period of time to allow the coating composition to dry out.

### Example 1

NPK particles with different nutrient contents were coated with 0.1 weight% of a first coating composition comprising 79 weight% of an oil comprising hydrotreated heavy naphthenic distillate and hydrotreated light naphthenic distillate, 13 weight% of a petroleum wax, 8 weight% of a fatty amine, and 100 ppm of dibutylhydroxytoluene, followed by 0.25 weight% of talcum. Each batch of particles was divided in two portions, and one portion received an additional layer of a second coating composition comprising 100 weight% of oil, and 100 ppm of dibutylhydroxytoluene. Uncoated particles were also tested.

Caking test: Particles are placed in a metal container, and a 10 kg-weight is used to apply pressure on top of the particles. The container containing the particles is placed in a chamber with controlled climate (25 °C and 60% relative humidity) for 24 h. During that time, the particles form a cake, i.e., an agglomeration of particles. The force, expressed in Kgf, required to break the cake is the caking value of the particles: a high force required to break the cake means that the particles have a strong caking parameter. For fertilizer particles, the lower the caking value, the better.

Dustiness test: Particles are weighted and placed in a vertical container which has a top end connected to an air-blowing device and a bottom end configured to let dust and air escape but not the coated particles. Air is blown through the container for 2 min. The particles are removed from the container and weighted. The relative difference in weight before and after the air blowing test represent the dust generated by the particles.

Water absorption test: Particles coated with and without the second coating composition were stored for 24 h at 25°C under 60 relative humidity (RH). These temperature and humidity conditions are typical of tropical climates. The particles are weighted at the beginning and at the end of the storage to obtain the amount of water absorbed by the particles. A decrease in the measured value is considered positive.

The results of the tests are shown in Table 1:

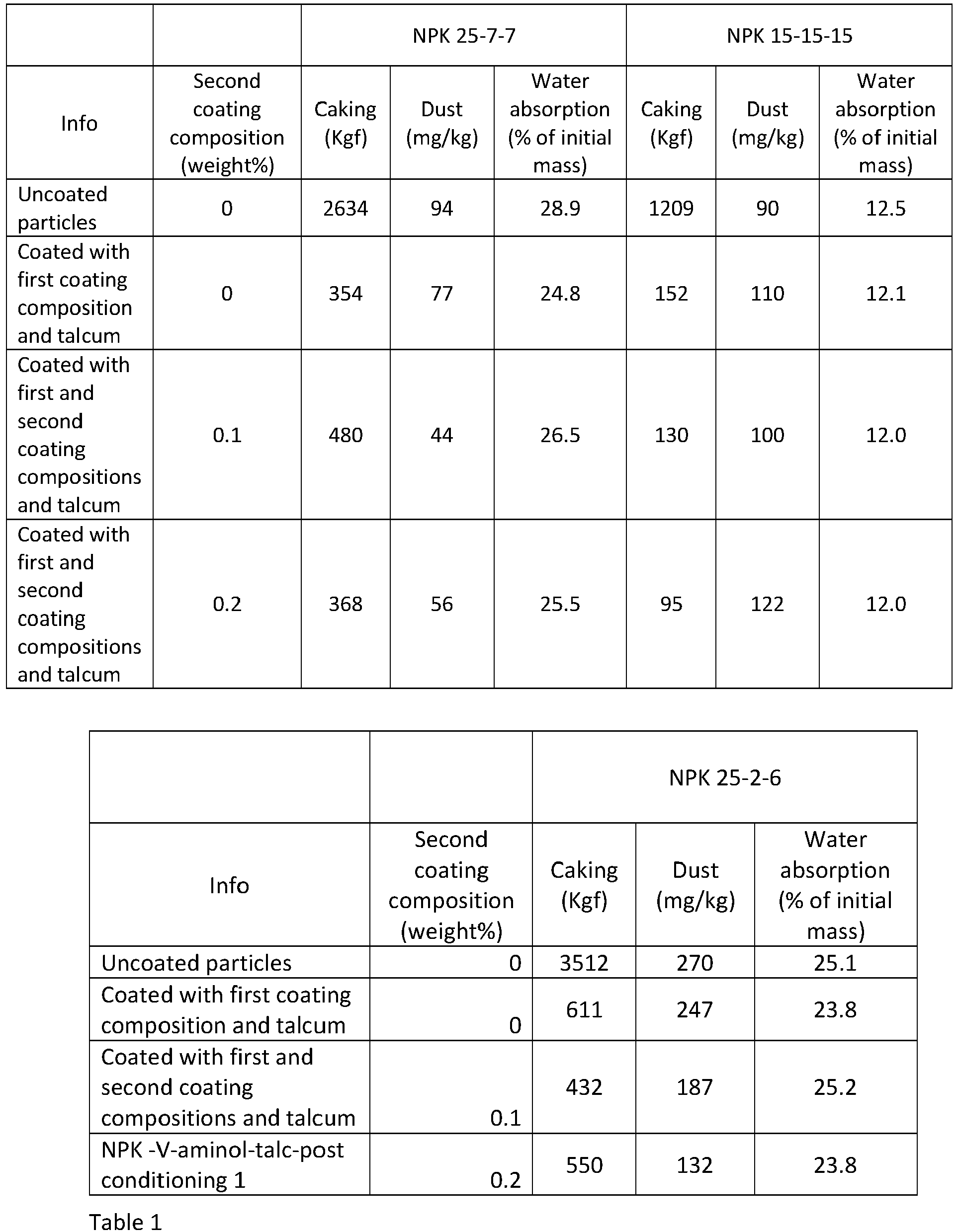

From these results, it can be seen that the application of the second coating composition improves the caking and dustiness properties in most cases, while the water absorption is similar to the particles not having the second coating composition.

### Example 2

The same NPK particles as used in Example 1 were coated with the same first coating composition and talcum. Each batch of particles was divided in two portions, and one portions received an additional layer of a second coating composition comprising 90 weight% of oil, 10 weight% of wax, and 100 ppm of dibutylhydroxytoluene. Uncoated particles were also tested. The same tests as in Example 1 (caking, dust, and water absorption) were performed. The results are shown in Table 2:

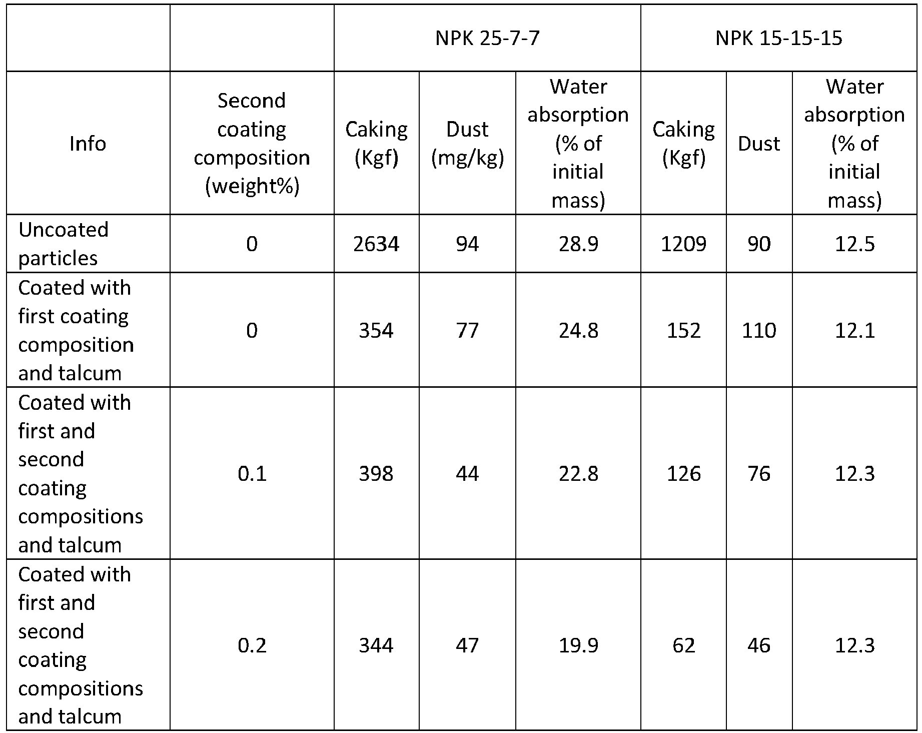

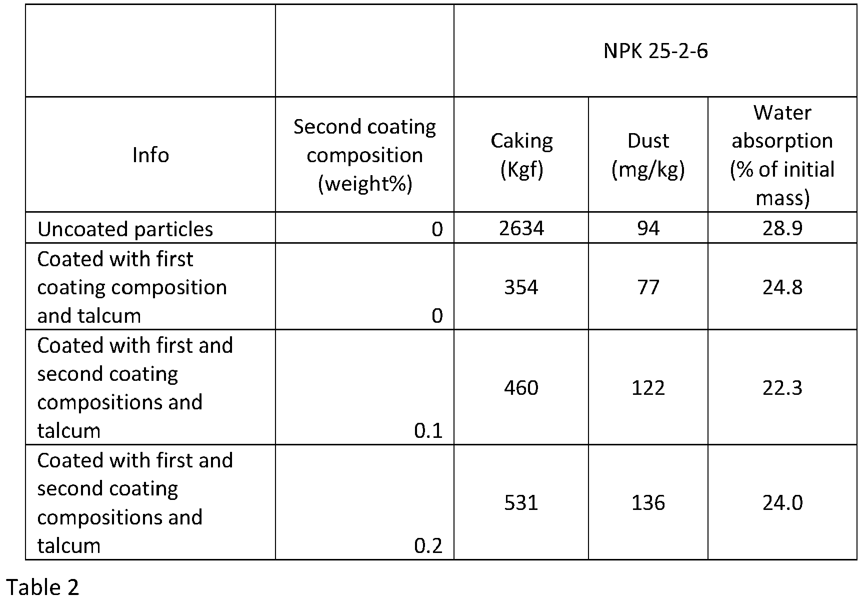

From these results, it can be seen that the application of the second coating composition improves the caking, dustiness properties, and the water absorption.

## Claims

1. A solid particle comprising a core, a first layer comprising a first coating composition and at least partially covering the core, a second layer comprising a second coating composition and at least partially covering the first layer, and water-insoluble particles between the first and second layers.

2. The solid particle according to claim 1, wherein the solid particle is a solid fertilizer particle.

3. The solid particle according to claim 1 or 2, wherein the core comprises a component selected from the group consisting of a source of nitrogen, a source of phosphorus, and a source of potassium.

4. The solid particle according to any one of claims 1 to 3, wherein the first coating composition comprises a component selected from the group consisting of an oil, a wax, an amine, an antioxidant, and mixtures thereof, in particular wherein the first coating composition comprises an oil, a wax, an amine, and an antioxidant.

5. The solid particle according to any one of claims 1 to 4, wherein the solid particle comprises from 0.01 to 1.0 weight% of the first coating composition.

6. The solid particle according to any one of claims 1 to 5, wherein the water-insoluble particles are selected from the group consisting of dolomite, diatomaceous earth, kaolin, talcum, gypsum, and silicates.

7. The solid particle according to any one of claims 1 to 6, wherein the second coating composition comprises a component selected from the group consisting of an oil, a wax, an amine, an antioxidant, and mixtures thereof, in particular wherein the second coating composition comprises an oil, a wax, and an antioxidant.

8. The solid particle according to any one of claims 1 to 7, wherein the solid particle comprises from 0.01 to 1.0 weight% of water-insoluble particles.

9. The solid particle according to any one of claims 1 to 8, wherein the solid particle comprises from 0.01 to 1.0 weight% of the second coating composition.

10. The solid particle according to any one of claims 1 to 9, wherein the solid particle comprises from 0.02 to 2.0 weight% of the first coating composition and the second coating composition.

11. A method for producing a solid particle according to any one of claims 1 to 10, the method comprising the steps of:
a) providing a core particle;
b) applying a first coating composition to the core particle provided in step a), thereby obtaining a coated particle comprising a first layer of a coating composition;
c) applying water-insoluble particles to the coated particle obtained in step b); and
d) applying a second coating composition to the particle obtained in step c).

12. Use of a coating system comprising a first coating composition, water-insoluble particles and a second coating composition, for coating a solid particle, in particular a solid fertilizer particle.

13. Use of a solid particle according to any one of claims 1 to 10 as a fertilizer.
